Europäisches Patentamt

European Patent Office

Office européen des brevets

(11) Numéro de publication: **0 1 1 4 550**
**B1**

# (12) FASCICULE DE BREVET EUROPEEN

(45) Date de publication du fascicule du brevet:
05.02.86

(21) Numéro de dépôt: 83402434.1

(22) Date de dépôt: 15.12.83

(51) Int. Cl.⁴: **C 01 B 17/16, B 01 D 53/14**

(54) Perfectionnement à l'enrichissement en hydrogène sulfuré de gaz qui en contiennent.

(30) Priorité: 21.12.82 FR 8221410

(43) Date de publication de la demande:
01.08.84 Bulletin 84/31

(45) Mention de la délivrance du brevet:
05.02.86 Bulletin 86/6

(84) Etats contractants désignés:
BE DE GB IT NL

(56) Documents cités:
FR - A - 2 328 657
FR - A - 2 379 477

(73) Titulaire: SOCIETE NATIONALE ELF AQUITAINE, Tour Aquitaine, F-92400 Courbevoie (FR)

(72) Inventeur: Oliveau, Olivier, Allée des Prés,
F-64230 Lescar (FR)
Inventeur: Blanc, Claude, 24 rue de Bagnères,
F-64000 Pau (FR)

(74) Mandataire: Kohn, Armand, 5 Avenue Foch,
F-92380 Garches (FR)

## Description

L'invention concerne l'enrichissement en hydrogène sulfuré de différents gaz qui contiennent ce composé. Elle vise plus particulierement des gaz renfermant à la fois de l'$H_2S$ et du $CO_2$ à côté d'autres gaz qui peuvent être des hydrocarbures, du CO, de l'hydrogene, etc. Le traitement des gaz de synthese, obtenus par la gazéification de coupes pétrolières lourdes, en est un exemple. Une application importante de l'invention est l'enrichissement d'un mélange de $CO_2$ avec $H_2S$, connu sous le nom de 'gaz acide', en vue de l'obtention d'un mélange à plus de 35% d'$H_2S$ pour la fabrication du soufre, selon le procédé CLAUS.

La technique de traitement de différents gaz, renfermant de l'hydrogene sulfuré, en vue de l'élimination de ce composé, es bien connue dans l'industrie; tels sont les cas d'élimination de l'$H_2S$ des gaz obtenus par la combustion ou la gazéification du pétrole ou du charbon, des gaz de raffinerie, du gaz de ville, du gaz naturel, de celui des fours à coke ou du gaz à l'eau. Cette élimination est souvent conduite de façon à récupérer l'hydrogene sulfuré sous la forme d'un gaz plus concentré en $H_2S$, utile industriellement.

Le procédé, généralement pratiqué à l'heure actuelle, consiste en une absorption de l'$H_2S$, et du $CO_2$, par un ou plusieurs liquides absorbants sélectifs de l'$H_2S$; le liquide est ensuite régénéré pour libérer les gaz voulus et il est utilisé à nouveau. Comme on le sait, les absorbants peuvent être constitués par des solvants physiques, comme par exemple méthanol, diméthyléther de polyéthylène glycols, hexaméthylphosphorotriamide, N-méthyl pyrrolidone, sulfolane ou autres. Des procédés très employés actuellement utilisent des solutions aqueuses de réactifs chimiques et en particulier des solutions aqueuses d'alcanolamines, notamment de méthyldiéthanolamine, triéthanolamine, diisopropanolamine, etc. On utilise également des mélanges de ces deux sortes d'absorbants, comme par exemple les mélanges d'eau, de diisopropanolamine et de sulfolane, les mélanges d'eau, de méthyldiéthanolamine et de sulfolane, et les mélanges d'eau, de méthanol et d'une ou plusieurs amines telles que méthyldiéthanolamine, diéthanolamines, monoéthanolamine et diisopropylamine. Le mode opératoire, devenu classique, consiste à faire passer le gaz à traiter, à contre-courant avec la solution aqueuse de l'absorbant, dans un ou plusieurs absorbeurs, de façon à retenir, dans le liquide, le maximum d'$H_2S$ et le minimum de $CO_2$ présents. Le liquide passe ensuite dans un régénérateur, où il est chauffé à une température suffisamment élevée ou/et stripé par un gaz inerte pour libérer les gaz précédemment absorbés. Les absorbants sont choisis parmi les absorbants précités qui retiennent sélectivement l'$H_2S$ des gaz traités; et permettent par consequent l'enrichissement en $H_2S$ des gaz libérés par le régénérateur. Lorsque la séparation des gaz désirés n'est pas suffisante à la sortie du régénérateur, les opérations sont répétées, c'est-à-dire que les gaz sont envoyés à nouveau dans un second absorbeur d'où ils vont dans un régénérateur qui peut étre du méme type que précédemment ; dans ce cas, les gaz sortant de l'absorbeur secondaire peuvent être recyclés vers le premier absorbeur ou acheminés vers un incinérateur ou un convertisseur d'unité à soufre CLAUS.

Une des difficultés, que l'on rencontre dans cette technique, est due aux fluctuations de la teneur en $H_2S$ du gaz initial à traiter ; lorsque cette teneur baisse, la concentration en $H_2S$ du gaz enrichi n'est plus suffisante. Pour parer à cet inconvénient, on a proposé de ne soutirer qu' une partie des gaz enrichis, à la sortie du régénérateur, et en envoyer une fraction plus ou moins grande dans un absorbeur secondaire. Un tel procédé est décrit dans la publication de brevet français n° 2 379 477 : la figure 1 de ce document montre le schéma d'une telle opération. D'autres variantes ont été prévues dans la littérature technique concernant cette question.

Malgré les perfectionnements apportés, le procédé d'enrichissement des gaz en $H_2S$ laisse toujours à désirer, surtout parce qu'il est difficile d'opérer un enrichissement au degré voulu, dans un même appareil, si la teneur en $H_2S$ du gaz initial varie fortement. De plus, les procédés classiques ne permettent pas l'obtention de gaz à plus de 35 ou 40% d'$H_2S$ à partir de gaz qui renferment $H_2S$ et $CO_2$ dans un rapport molaire $H_2S : CO_2$ inférieur à 0,1 environ, à moins d'employer des installations très volumineuses, à absorbeurs et régénérateurs multiples.

C'est cet inconvénient que supprime la présente invention: elle permet en effet tout taux d'enrichissement voulu, même à partir de gaz renfermant $H_2S$ et $CO_2$ dans un rapport molaire $H_2S : CO_2$ très inférieur à 0,1, pour arriver à des mélanges gazeux renfermant 40% d'$H_2S$ ou bien davantage.

Le procédé suivant l'invention permet en outre d'évaluer rapidement, à partir de l'analyse du gaz initial le taux de soutirage du gaz acide final riche en $H_2S$ ; autrement dit, l'invention permet de connaître immédiatement, sans les tâtonnements nécessaires dans la technique connue, la proportion de gaz acide final que l'on peut soutirer pour y trouver la concentration voulue en $H_2S$.

Le procédé suivant l'invention consiste à soumettre le gaz initial renfermant $H_2S$ et $CO_2$ à l'absorption par un liquide absorbant sélectif de l'$H_2S$ dans une zone d'absorption primaire, à transférer le liquide chargé des composés absorbés dans une zone de régénération par chauffage et/ou stripage par un gaz inerte, à soutirer une fraction des gaz ainsi libérés et en faire passer le restant dans une seconde zone d'absorption, alimentée en liquide absorbant neuf ou régénéré. Ce procédé est caractérisé en ce que la zone de régénération et celle de la seconde absorption, présentent une zone commune où ont lieu, simultanément , les 4 opérations suivantes : introduction du liquide chargé venant de la première absorption, arrivée de la quasi totalité des gaz libérés par la régénération, écoulement du liquide de l'absorption secondaire et sortie d'une fraction prédéterminée de gaz acide enrichi en $H_2S$.

Alors que dans la technique connue, les entrées et sorties des liquides et gaz sus-indiqués se font en des points distincts, souvent bien éloignés les uns des autres, conformément à l'invention, elles ont lieu aussi près que possible les unes des autres, dans une partie commune aux zones de régénération et de seconde absorption. Cette mesure conduit à une efficacité telle qu'il devient possible d'obtenir des facteurs d'enrichissement élevés, par exemple de 130 fois, quelles que soient la teneur en $H_2S$ du gaz initial et la valeur du rapport molaire $H_2S:CO_2$

2

dans ce gaz, et cela avec le même appareil, alors que, selon la technique antérieure, il faudrait ajouter des absorbeurs supplémentaires. Par facteur d'enrichissement on entend le rapport de la concentration molaire de l'$H_2S$ dans la fraction acide des gaz soutirés à la concentration molaire de l'$H_2S$ dans la fraction acide du gaz à épurer, et par fraction acide l'ensemble $H_2S + CO_2$. Ainsi peut-on voir que l'enrichissement calculé d'après l'exemple 1 du brevet précité, est de 0,3 à 22% d'$H_2S$ pour un rapport molaire $H_2S:CO_2$ de 4% dans le gaz initial, alors que suivant l'invention, on peut passer à 40% en partant de 0,33% d'$H_2S$ dans le gaz initial avec un rapport molaire $H_2S:CO_2$ comparable ou même de 0,25% d'$H_2S$ dans le gaz initial avec un rapport molaire $H_2S:CO_2$ de 1%, comme le montrent les exemples donnés plus loin.

Le facteur d'enrichissement en $H_2S$ du gaz soutiré étant sous la dépendance du taux de soutirage de ce gaz, l'invention fournit un moyen commode et rapide pour la détermination de ce taux, c'est-à-dire la proportion de gaz final à retirer du circuit par rapport au volume total de gaz libéré par la régénération.

Ainsi, suivant l'invention, lorsqu'on cherche à multiplier par n la concentration en $H_2S$ de la fraction acide, à savoir $H_2S + CO_2$, contenue dans l'absorbant à régénérer, il convient de soutirer de la zone de régénération, seulement un débit de gaz enrichi en $H_2S$ sensiblement égal à 1/n du débit total du gaz acide contenu dans l'absorbant à régénérer issu de la zone d'absorption primaire. Cette relation linéaire peut surprendre, parce qu'on ne la retrouve pas dans la technique connue ; elle s'explique cependant par la très grande efficacité du procédé, suivant l'invention, grâce à la zone commune entre la régénération et l'absorption secondaire, décrite plus haut.

Le mode de réglage ci-dessus convient tout particulièrement lorsque le liquide d'absorption est constitué par une solution aqueuse de méthyldiéthanolamine, mais il s'applique également, avec une aussi bonne approximation, quand on utilise d'autres absorbants sélectifs de l'$H_2S$.

L'appareil pour la réalisation du procédé suivant l'invention comprend au moins 1 absorbeur primaire, recevant en bas le gaz initial à traiter, et en haut la solution absorbante venant d'un régénérateur. A la manière habituelle, l'absorbant liquide, soutiré au bas de l'absorbeur, passe dans un échangeur thermique, pour récupérer la chaleur de l'absorbant venant du bas du régénérateur. Le liquide du bas de l'absorbeur, ainsi réchauffé, est introduit à une certaine hauteur du régénérateur qui est relié à un absorbeur secondaire. L'appareil est caractérisé en ce que sensiblement à partir du niveau où arrive le liquide de l'absorbeur primaire, la partie supérieure du régénérateur fonctionne en tant qu'absorbeur secondaire. Contrairement à toutes les installations similaires connues, il n'y a pas ici de solution de continuité entre le régénérateur et l'absorbeur secondaire.

D'autre part, une région médiane de l'ensemble régénérateur-absorbeur secondaire présente cette caractéristique nouvelle qu'elle est le siège de 4 fonctions simultanées, différentes : (1°) l'entrée du liquide absorbant, charge, (2°) flux ascendant des gaz libérés dans le régénérateur, (3°) sortie d'une fraction de ce gaz et (4°) descente, suivant toute ou grande partie de la section de l'appareil, du liquide absorbant ayant agi dans l'absorbeur secondaire. Comme on l'a vu plus haut, cette disposition spéciale se traduit par une efficacité considérablement accrue de l'installation suivant l'invention.

Bien entendu, les hauteurs ou nombres de plateaux des absorbeurs et régénérateur sont calculés de façon appropriée aux conditions industrielles des opérations envisagées.

L'invention est décrite ci-après sous une de ses formes de réalisation non limitatives.

Les dessins annexés représentent :

Fig. 1 un schéma de l'installation suivant l'invention;

Fig. 2 un graphique comprenant des courbes donnant les pourcent molaire d'$H_2S$ dans le gaz soutiré en fonction du taux pourcent de soutirage de ce gaz pour différentes teneurs en $H_2S$ du gaz acide (fraction acide) contenu dans l'absorbant à régénérer;

Fig. 3 un graphique permettant de déterminer le taux de soutirage pour obtenir la teneur molaire voulue en $H_2S$ dans le gaz acide soutiré, par la connaissance de la concentration molaire en $H_2S$ du gaz acide contenu dans le liquide venant du premier absorbeur.

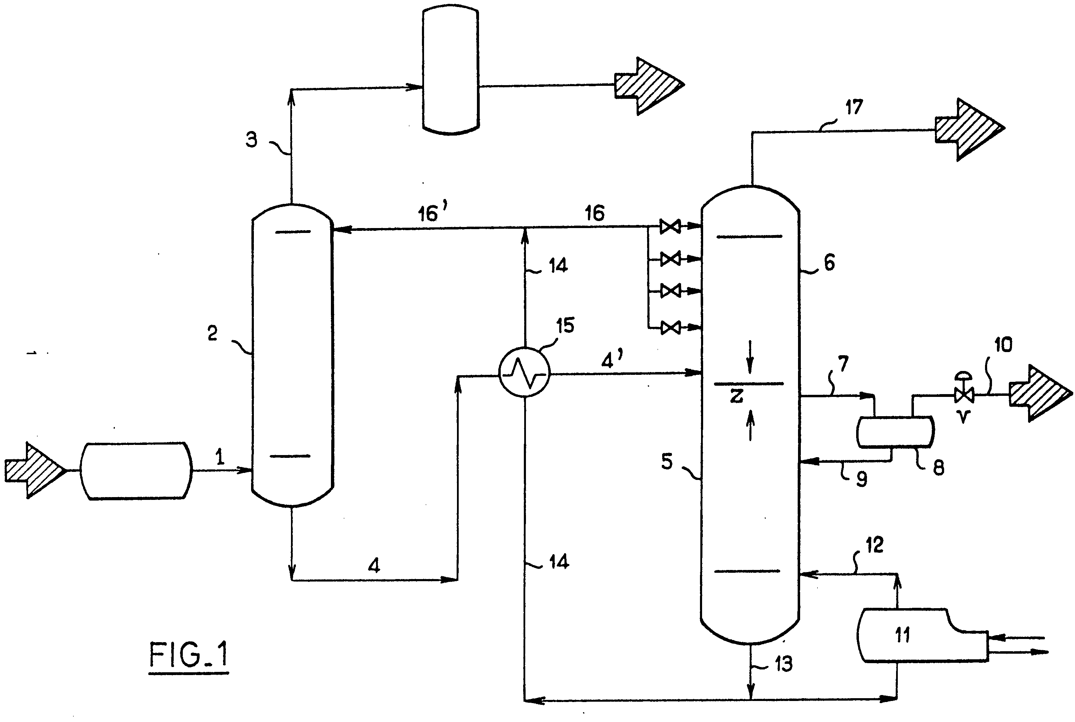

Sur la figure 1, le repère 1 désigne l'arrivée du gaz initial à traiter, renfermant $H_2S$ et $CO_2$, au bas de l' absorbeur classique 2, comprenant par exemple de 10 à 25 plateaux. Les gaz non absorbés sortent par 3, passent éventuellement par un étage d'épuration fine complémentaire non repéré, et sont utilisés à certaines fabrications ou acheminés vers des réseaux d'utilisation.L'absorbant liquide, ayant dissous la quasi totalité de l'$H_2S$ et partiellement le $CO_2$ dans l'absorbeur 2, quitte celui-ci par la canalisation 4 ; celle-ci passe dans un échangeur 15 où le liquide s'échauffe par échange indirect de chaleur avec l'absorbant venant par 13 et 14 du régénérateur 5. Après l'échangeur 15, la partie chaude 4' de la canalisation 4 aboutit au régénérateur 5, dans une région Z de celui-ci où commence la fonction absorbante de la partie 6. A un niveau voisin de celui de l'arrivée de 4', se trouve la sortie 7 du gaz soutiré ; c'est par là que se fait le soutirage d'une fraction des gaz libérés par chauffage du bas du régénérateur 5 (circuit 11-12). On a représenté sur les dessins les accessoires habituels d'une conduite de soutirage d'un gaz à partir d'un liquide : la sortie 7 mène dans un condenseur 8 d'où le liquide condensé retourne par 9 dans le régénérateur 5, alors que le gaz refroidi quitte l'appareil par 10, la vanne de réglage v permettant d'en faire varier le débit.

La région Z de l'intérieur du régénérateur dans la partie comprise entre l'arrivée de 4' et le départ de 7 a une grande importance : c'est là que se rencontrent l'absorbant à régénérer amené par le conduit 4', l'absorbant que l'on introduit dans l'absorbeur 6 par la conduite 16, de préférence à entrée à positionnement réglable comme montré sur le dessin, et qui à ce niveau est chargé de gaz acide, et la totalité des composés acides désorbés dans le régénérateur 5, dont une fraction est soutirée par la sortie 7. De préférence, l'arrivée 4' aboutit au 1er plateau, au bas de l'absorbeur 6, tandis que la sortie 7 se trouve entre ce plateau et le plateau sous-jacent, c'est-à-dire le dernier du régénérateur. Contrairement aux dispositions des appareils connus, on a ici un mélange direct, à l'intérieur même d'une zone Z spéciale commune au régénérateur et à l'absorbeur secondaire, entre les differents courants liquides et gazeux. Comme, de préférence, il n'y a pas de séparation entre les régions 5 et 6, l'action de ces différents courants s'exerce dans toute la section transversale de l'appareil, ce qui procure une efficacité remarquable. A la sortie supérieure 17 de 1' absorbeur 6, l'$H_2S$ se trouve ramené à des proportions minimes.

La répartition du débit d'absorbant régénéré entre les deux absorbeurs, par les branches 16 et 16' de la conduite 14, est réglée selon les besoins du travail.

Dans un appareil comme celui qui vient d'étre décrit, on a effectué une série de purifications de différents gaz à teneur en $H_2S$ variable. Le régénérateur 5 comportait 18 plateaux et l'absorbeur 6 secondaire en avait 16.

## EXEMPLE 1

Le traitement est effectué sur un gaz initial, constitué par du gaz de synthèse brut à 1,2% $H_2S$, 24,6% $CO_2$, 74,2% $CO + H_2$.

L'absorbant est constitué par une solution aqueuse à 4 moles par litre de méthyldiéthanolamine.

Une pression de 57 bars règne dans l'absorbeur 2, dont le fond est à 72°C. Cet absorbeur comprend 25 plateaux. Les conditions et résultats de cette opération sont réunis au tableau 1. On peut y voir qu'à la sortie 7, on a soutiré un gaz à 65% d'$H_2S$ contre 1,2% dans le gaz initial. Quant au gaz de synthèse, sortant en 3, il ne contenait plus que 10 vpm d'$H_2S$ et 96,2% $CO + H_2$, ce qui le rendait propre à la fabrication du méthanol.

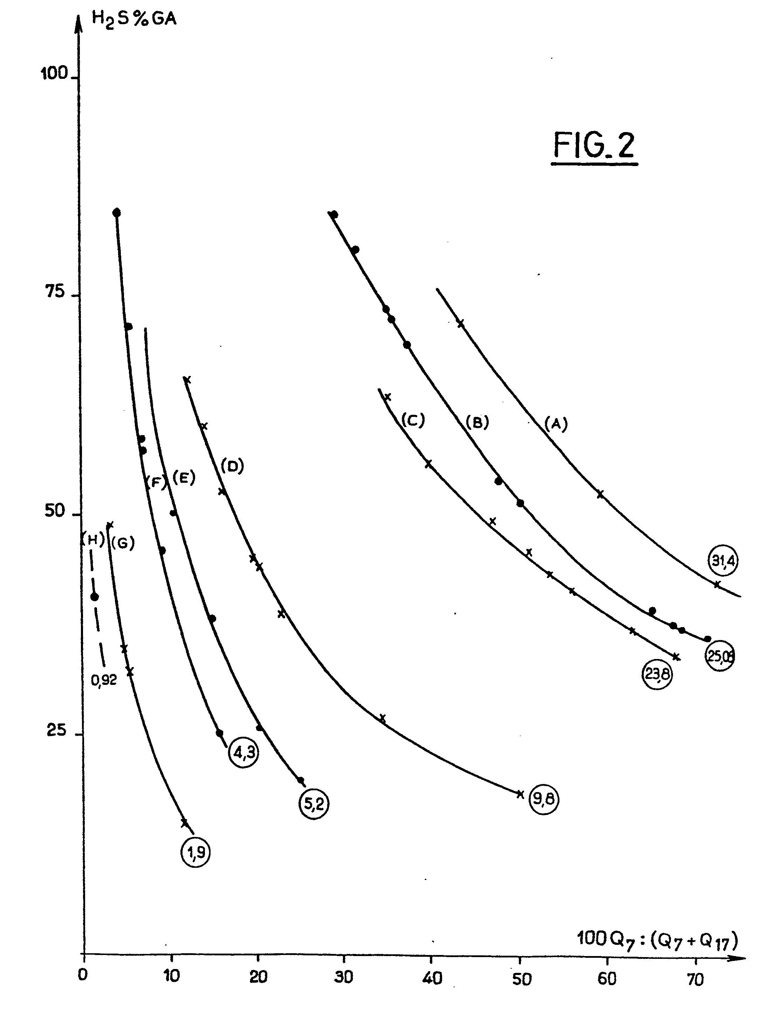

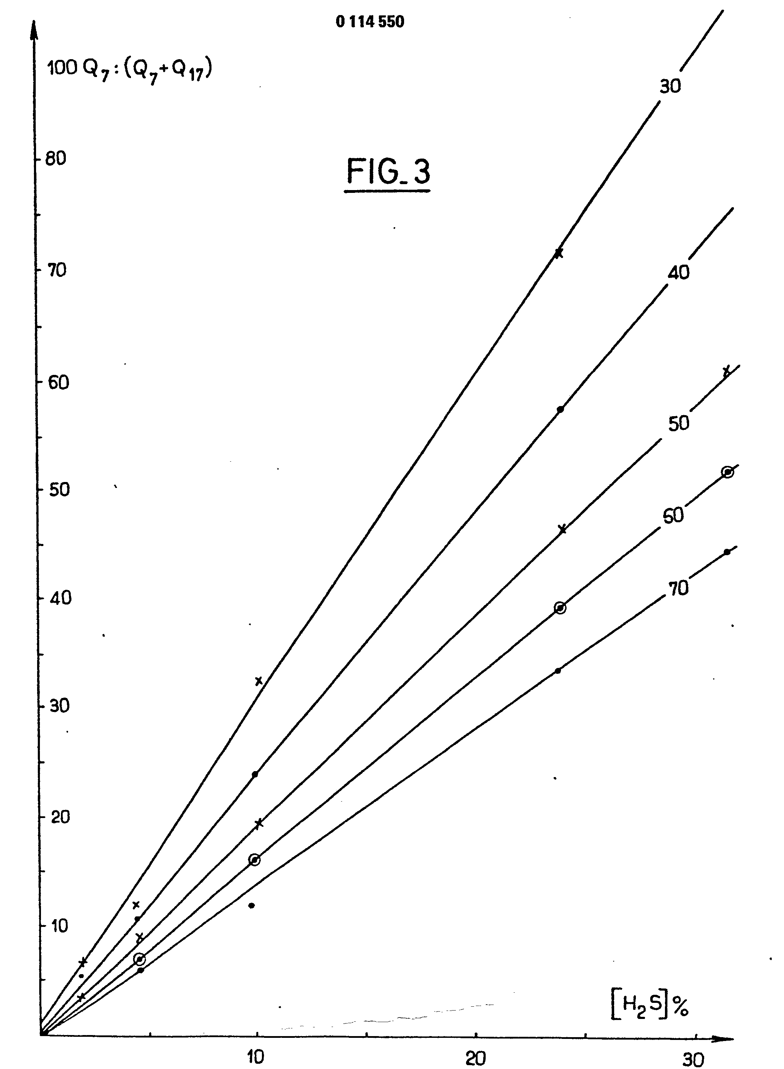

Pour atteindre la teneur de 65% dans le gaz soutiré en 7, on a limité ce soutirage à 7,8% du gaz acide, disponible dans l'absorbant à régénérer, c'est-à-dire (2100 : 26840)x 100; ce réglage résulte des graphiques des figures 2 et 3.

Voir TABLEAU 1 à la page suivante.

## TABLEAU 1

| Fig. 1 | Teneur en $H_2S$ | Teneur en $CO_2$ | $H_2S/(H_2S+CO_2)$ mol. | Débit (gaz) $m^3N/h$ | Débit (liq.) $m^3/h$ | T°C |
|---|---|---|---|---|---|---|
| Gaz 1 | 1,2% | 24,6% | 0,046 | 122 000 | – | 37° |
| Liquide 4' | 6,8 g/l | 159 g/l | 0,052 | – | 325 | 100° |
| Gaz 7 | 65% | 35% | 0,650 | 2 100 | – | 102° |
| Gaz 17 | – | – | 0,04 | 24 740 | – | 40° |
| Gaz 7 + Gaz 17 | – | – | – | 26 840 | – | – |
| Liquide 14 | 0,5 g/l | 0,2 g/l | 0,770 | – | 485 | 127° |
| Liquide 16 | 0,5 g/l | 0,2 g/l | 0,770 | – | 160 | 40° |
| Liquide 16' | " | " | – | – | 325 | " |
| Gaz 3 | 10 vpm | 3,8% | $2,6 \times 10^{-4}$ | 95 160 | – | – |

## EXEMPLE 2

### Epuration d'un gaz naturel

Il s'agit d'un gaz renfermant 0,33% d'$H_2S$, 7,67% de $CO_2$ et 92% d'hydrocarbures.
La solution de méthyldiéthanolamine avait une normalité de 4.
L'absorbeur 2 travaillait sous une pression de 77 bars et son fond était à 53°C. Cet absorbeur comportait 12 plateaux.

**TABLEAU 2**

| Fig 1 | Teneur en $H_2S$ | Teneur en $CO_2$ | $H_2S/(H_2S+CO_2)$ mol. | Débit (gaz) $m^3N/h$ | Débit (liq.) $m^3/h$ | T°C |
|---|---|---|---|---|---|---|
| Gaz 1 | 0,33% | 7,67% | 0,0412 | 98 925 | — | 35 |
| Liquide 4' | 6,26 g/l | 74,6 g/l | 0,098 | — | 80 | 102 |
| Gaz 7 | 40% | 60% | 0,40 | 750 | — | 102 |
| Gaz 17 | — | — | 0,0115 | 2 580 | — | 38 |
| Gaz 7 + Gaz 17 | — | — | — | 3 330 | — | — |
| Liquide 14 | 0,4 g/l | 0,2 g/l | 0,72 | — | 135 | 128 |
| Liquide 16 | " | " | " | — | 55 | 38 |
| Liquide 16' | " | " | " | — | 80 | " |
| Gaz 3 | 3 vpm | 4,8% | $6 \times 10^{-5}$ | 95 590 | — | 38 |

Comme on le voit au tableau 2, l'épuration est très poussée, puisqu'il n'y a plus que 3 vpm dans le gaz sortant en 3. Il est intéressant de constater qu'en partant d'un gaz initial à 0,33% d'H$_2$S, on est arrivé à 40% dans le gaz final.

## EXEMPLE 3

### Epuration d'un gaz naturel

Ce gaz naturel, différent de celui de l'example 2, contenait 0,25% d'H$_2$S, 25% de CO$_2$ et 74,75% d'hydrocarbures. Malgré la faible teneur initiale en H$_2$S, on arrive à 40% de ce composé dans la fraction soutirée en 7, ce qui permet l'utilisation de celle-ci dans la fabrication du soufre par le procédé CLAUS.

L'absorbeur 2 fonctionnait sous 80 bars et comportait 14 plateaux. La normalité de la solution de méthyldiéthanolamine était de 4,2.

Il est intéressant de voir que le volume de la fraction soutirée en 7 pouvait se calculer à partir de l'enrichissement voulu. Le rapport H$_2$S:(CO$_2$+H$_2$S) dans le liquide 4' était de 0,019 ; pour passer à 40%, on devait effectuer un enrichissement de 0,4:0,019 = 21 fois ; il fallait donc diviser par 21 le débit de CO$_2$+H$_2$S contenu dans le liquide 4'. Or, le débit de gaz acide en 4' était de 5231 m3/h. En divisant 5231 par 21, on trouve 249 m3/h.

Le tableau 3 montre que ce résultat a été atteint effectivement avec 250 m3/h, ce qui constitue une excellente approximation pour le procédé suivant l'invention.

Voir le Tableau 3 à la page suivante.

## TABLEAU 3

| Fig 1 | Teneur en H$_2$S | Teneur en CO$_2$ | H$_2$S/(H$_2$S+CO$_2$) mol. | Débit (gaz) m$^3$N/h | Débit (liq.) m$^3$/h | T°C |
|---|---|---|---|---|---|---|
| Gaz 1 | 0,25% | 25% | 0,0099 | 40 360 | – | 40 |
| Liquide 4' | 1,26 g/l | 84 g/l | 0,019 | – | 120 | 96 |
| Gaz 7 | 40% | 60% | 0,40 | 250 | – | 100 |
| Gaz 17 | – | – | 0,0029 | 4 980 | – | 25 |
| Gaz 7 + Gaz 17 | – | – | – | 5 230 | – | – |
| Liquide 14 | 0,6 g/l | 0,3 g/l | 0,72 | – | 300 | 127 |
| Liquide 16 | " | " | " | – | 180 | 25 |
| Liquide 16' | " | " | " | – | 120 | 25 |
| Gaz 3 | 4 vpm | 14,6% | 2,7 x 10$^{-5}$ | 35 130 | – | " |

## EXEMPLE 4

Le gaz acide traité provient d'un lavage d'un gaz naturel par le procédé de désacidification totale à la diéthanolamine. Il renferme 99,32% de $CO_2$ et 0,68% d'$H_2S$. L'absorbeur 2 fonctionne sous une pression de 2 bars absolus et comporte 8 plateaux. La normalité de la méthyldiéthanolamine employée comme absorbant est de 4.

Les conditions opératoires et résultats sont donnés au tableau 4. On peut y voir qu'une fois épuré, le gaz ne contient plus que 100 vpm d'$H_2S$ (sortie 3), et le gaz soutiré en 7 renferme 85% d'$H_2S$ ; pour obtenir cet enrichissement considérable, on a soutiré seulement 5% du total des débits gazeux sortant en 7 et 17.

## EXEMPLES 5 à 13

Des gaz acides de différentes teneurs en $H_2S$ et $CO_2$ ont été traités comme dans les exemples précédents : en faisant varier le % de gaz soutiré en 7, on déterminait la teneur en $H_2S$ dans le gaz final, ainsi récupéré.

Le tableau 5 réunit les résultats obtenus avec quatre concentrations différentes en $H_2S$ dans le liquide sortant par 4 de l'absorbeur 2.

Dans ce tableau les symboles suivants sont employés :

[$H_2S$]% ... % de moles d'$H_2S$ dans le total $H_2S + CO_2$ absorbé par la méthyldiéthanolamine ;

[$CO_2$]% ... % de moles $CO_2$ dans ce même total;

100 $Q_7/(Q_7 + Q_{17})$ débit gazeux soutiré en 7, exprimé en % du débit gazeux total, $Q_7 + Q_{17}$, sortant en 7 et 17, ce dernier correspondant au débit total de gaz acide contenu dans l'absorbant à régénérer arrivant par 4'.

$H_2S$%GA ... % de $H_2S$ dans le débit $Q_7$ de gaz enrichi, soutiré en 7.

Voir Tableaux 4 et 5 à la page suivante.

**TABLEAU 4**

| Fig 1 | Teneur en $H_2S$ | Teneur en $CO_2$ | $H_2S/(H_2S+CO_2)$ mol. | Débit (gaz) $m^3N/h$ | Débit (liq.) $m^3/h$ | T°C |
|---|---|---|---|---|---|---|
| Gaz 1 | 0,68% | 99,32% | 0,0068 | 2 181 | – | 40 |
| Liquide 4' | 2,78 g/l | 79,81 g/l | 0,043 | – | 8 | 100 |
| Gaz 7 | 85% | 15% | 0,85 | 17 | – | 105 |
| Gaz 17 | – | – | 0,017 | 323 | – | 40 |
| Gaz 7 + Gaz 17 | – | – | – | 340 | – | – |
| Liquide 14 | 0,65 g/l | 0,31 g/l | 0,73 | – | 20 | 129 |
| Liquide 16 | " | " | " | – | 12 | 40 |
| Liquide 16' | " | " | " | – | 8 | 40 |
| Gaz 3 | 100 vpm | 99,99% | $10^{-4}$ | 1 841 | – | 40 |

**TABLEAU 5**

| Ex n° | $[H_2S]$% | $[CO_2]$% | 100 $Q_7 : (Q_7+Q_{17})$ | $H_2S$%GA |
|---|---|---|---|---|
| 5 | 4,3 | 95,7 | 15 | 25 |
| 6 | " | " | 8 | 52 |
| 7 | " | " | 5 | 73 |
| 8 | 9,8 | 90,2 | 50 | 19 |
| 9 | " | " | 30 | 31 |
| 10 | " | " | 15 | 56 |
| 11 | 23,8 | 76,2 | 65 | 36 |
| 12 | " | " | 50 | 47 |
| 13 | " | " | 37 | 60 |

Il en résulte que les teneurs finales en $H_2S$%, dans le gaz ($H_2S$%GA) sortant en 7, varient en sens inverse des proportions % de gaz soutiré $100Q_7 : (Q_7+Q_{17})$.

Les données du Tableau 5, ainsi que d'autres résultats, tirés de séries d'essais semblables, sont portées sur le graphique de la figure 2 : elles forment un faisceau de courbes A, B, C, D, E, F, G et H tracées pour des teneurs $[H_2S]\%$ respectives, de 31,4, 25,08, 23,8, 9,8, 5,2, 4,3, 1,9 et 0,92 dans le liquide d'absorption allant vers le régénérateur. Ces courbes, qui font partie de l'invention, procurent un moyen fort pratique pour déterminer d'avance, sans tâtonnements industriels toujours coûteux, la proportion de gaz à soutirer en 7 pour y trouver la teneur voulue en $H_2S$.

Les renseignements des courbes A à G de la figure 2 sont représentés sous une autre forme par un faisceau de droites sur la figure 3 ici:

les abscisses sont les $[H_2S]\%$ dans le liquide sortant de l'absorbeur primaire 2;

les ordonnées, les proportions % de gaz à soutirer en 7, c'est-à-dire $100Q_7:(Q_7+Q_{17})$;

chaque droite correspond à une concentration voulue en $H_2S$ dans le gaz soutiré.

Ainsi, par exemple, si l'on désire un gaz à 40% d'$H_2S$, alors qu'on dispose d'un liquide à 20% $H_2S$ + 80% $CO_2$, soit $H_2S/(H_2S+CO_2)=0,2$, (abscisse 20), on peut soutirer 48,2% du gaz total $Q_7+Q_{17}$. Mais si, dans les mêmes conditions, on veut un gaz final à 70% $H_2S$, on ne peut plus soutirer que 28,3%.

La pente de chacune des droites, 30, 40, 50, etc. permet de connaître rapidement la proportion de gaz soutiré, à ne pas dépasser, pour obtenir la concentration voulue en $H_2S$ dans le gaz final. Ainsi, par exemple, pour avoir, dans ce gaz, 30% d'$H_2S$ ou davantage, le rapport

$$[100Q_7:(Q_7+Q_{17})] : [H_2S]\% \text{ (Fig. 3)}$$
ordonnée
abscisse ne doit pas dépasser 3,05.

Si l'on désire plus de 40% $H_2S$ dans $Q_7$, ce rapport doit être inférieur à 2,4.

Comme le précédent, le graphique de la figure 3 fait partie de l'invention, en tant que moyen nouveau pour le réglage du fonctionnement de l'appareil d'enrichissement de gaz en hydrogène sulfuré.


## Revendications

1. Perfectionnement à l'enrichissement d'un gaz en hydrogène sulfuré, comprenant l'absorption sélective par un liquide, dans une zone d'absorption primaire, la régénération du liquide par chauffage et/ou stripage par un gaz inerte avec libération des gaz absorbés et récupération d'une fraction des gaz libérés, le reste étant soumis à une seconde absorption, dans une zone d'absorption secondaire par du liquide absorbant neuf ou régénéré identique à celui utilisé dans la zone d'absorption primaire, caractérisé en ce que, dans une seule et même zone d'opération (Z), commune aux zones de régénération et d'absorption secondaire, ont lieu simultanément : l'arrivée du liquide de la première absorption, le flux des gaz libérés lors de la régénération, l'écoulement du liquide provenant de l'absorption secondaire et le départ d'une fraction des gaz libérés enrichie en $H_2S$.

2. Perfectionnement suivant la revendication 1, caractérisé en ce que le liquide, ayant servi à l'absorption secondaire, se mélange avec le contenu de la zone de régénération suivant toute la section de la veine de celui-ci, ou suivant une grande partie de cette section.

3. Perfectionnement suivant la revendication 1 ou 2, caractérisé en ce que le débit de la fraction de gaz soutiré, est sensiblement égal à 1/n du débit $H_2S$ + $CO_2$ contenu dans le liquide absorbant issu de la zone d'absorption primaire, lorsque le rapport molaire $H_2S:(H_2S + CO_2)$ désiré est n fois supérieur au rapport correspondant dans le liquide absorbant issu de la zone d'absorption primaire.

4. Perfectionnement suivant une des revendications 1 à 3, caractérisé en ce que le débit de la fraction de gaz final soutiré, en % du débit de gaz libéré pendant la régénération, est prédéterminé en fonction de la teneur % voulue en $H_2S$ dans le gaz final, pour différentes concentrations de $H_2S$ dans le liquide provenant de l'absorption primaire, au moyen du graphique de la figure 2.

5. Perfectionnement suivant une des revendications 1 à 3, caractérisé en ce que le débit de la fraction de gaz final soutiré, en % du débit de gaz libéré pendant la régénération, est prédéterminé en fonction de la teneur % voulue en $H_2S$ dans le gaz soutiré, pour différentes concentrations de $H_2S$ dans le liquide provenant de l'absorption primaire, au moyen du graphique de la figure 3.

6. Perfectionnement suivant une des revendications 1 à 3, caractérisé en ce que le débit de la fraction de gaz final, soutiré, en % du débit de gaz libéré dans la régénération, est réglé de telle façon que ce %, divisé par le % d'$H_2S$ dans les gaz $CO_2+H_2S$ présents dans l'absorbant après la première absorption, ne dépasse pas 3,05 lorsqu'on désire 30% ou plus d'$H_2S$ dans le gaz final, et qu'il soit inférieur à 2,4, si le gaz final doit renfermer plus de 40% $H_2S$.

7. Appareil pour la réalisation du procédé perfectionné suivant une des revendications 1 à 6, qui comprend au moins un absorbeur primaire (2), un régénérateur (5) et un absorbeur secondaire (6), une canalisation (4,4') pour transférer le liquide absorbant du bas de l'absorbeur primaire (2) en tête du régénérateur (5), des conduites (13-14-1616') pour faire passer l'absorbant régénéré du bas du regénérateur dans le haut des deux absorbeurs, une sortie de gaz (3,17) au sommet de chaque absorbeur, et un dispositif de soutirage (7) réglable (v) du gaz final en haut du régénérateur, caractérisé en ce que l'espace intérieur de l'absorbeur secondaire (6) fait suite directe vers le haut à celui du régénérateur (5), à partir d'une zone intermédiaire (Z) située près du niveau d'arrivée (4') de l'absorbant et du niveau de soutirage (7) du gaz final.

8. Appareil suivant la revendication 7, caractérisé en ce que l'absorbeur secondaire (6) et le régénérateur (5) se font suite mutuellement par toute leur section transversale.

9. Appareil suivant la revendication 7 ou 8, caractérisé en ce que le niveau de soutirage (7) du gaz final est près du niveau d'introduction (4') de l'absorbant dans le régénérateur, et ces deux niveaux sont près de celui où commence l'action de l'absorbeur secondaire (6).

10. Appareil suivant la revendication 9, caractérisé en ce que le soutirage (7) est au niveau du dernier plateau de régénération, tandis que le niveau d'introduction (4') correspond au 1er plateau de l'absorbeur secondaire, situé immédiatemant au-dessus du dernier plateau du régénérateur.

## Patentansprüche

1. Anreicherung eines Gases, die eine selektive Absorption durch eine Flüssigkeit in einer primären Absorptionszone, die Regenerierung der Flüssigkeit durch Erwärmen und/oder Strippen mit einem inerten Gas unter Freisetzung der absorbierten Gase und die Rückgewinnung einer Fraktion der freigesetzten Gase aufweist, wobei der Rest einer zweiten Absorption in einer sekundären Absorptionszone durch eine neue oder regenerierte absorbierende Flüssigkeit unterworfen wird, die identisch mit der in der primären Absorptionszone verwendeten Flüssigkeit ist, dadurch gekennzeichnet, daß in ein und derselben Arbeitszone (Z), die den Zonen der Regeneration und der sekundären Absorption gemeinsam ist, gleichzeitig folgendes abläuft: Zulauf der Flüssigkeit der ersten Absorption, der Durchfluß der während der Regenerierung freigesetzten Gase, das Abströmen der von der zweiten Absorption kommenden Flüssigkeit und das Austreten einer Fraktion der freigesetzten und mit $H_2S$ angereicherten Gase.

2. Anreicherung nach Anspruch 1, dadurch gekennzeichnet, daß sich die Flüssigkeit, die zur zweiten Absorption gedient hat, mit dem Inhalt der Regenerierungszone im Verlauf des gesamten Stromabschnitts desselben oder im Verlauf eines großen Teils dieses Abschnittes vermischt.

3. Anreicherung nach Anspruch 1 oder 2, dadurch gekennzeichnet, daß die Menge der abgezogenen Gasfraktion etwa gleich 1/n der Menge $H_2S + CO_2$ ist, die in der absorbierenden und von der primären Absorptionszone kommenden Flüssigkeit enthalten ist, wenn das gewünschte Molverhältnis $H_2S:(H_2S+CO_2)$ n-fach größer als das entsprechende Verhältnis der von der primären Absorptionszone kommenden absorbierenden Flüssigkeit ist.

4. Anreichung nach einem der Ansprüche 1 bis 3, dadurch gekennzeichnet, daß die Menge der abschließenden abgezogenen Gasfraktion in Prozent der Menge des während der Regenerierung freigesetzten Gases als eine Funktion des gewünschten $H_2S$-Gehaltes in Prozent abschließend im Gas gemäß dem Diagramm in Figur 2 für verschiedene $H_2S$-Konzentrationen in der von der ersten Absorption kommenden Flüssigkeit bestimmbar ist.

5. Anreicherung nach einem der Ansprüche 1 bis 3, dadurch gekennzeichnet, daß die Menge der Fraktion des abschließend abgezogenen Gases in Prozent der Menge des während der Regenerierung freigesetzten Gases als eine Funktion des gewünschten $H_2S$-Gehaltes in Prozent im abgezogenen Gas gemäß dem Diagramm in Figur 3 für verschiedene $H_2S$-Konzentrationen in der von der ersten Absorption kommenden Flüssigkeit bestimmbar ist.

6. Anreicherung nach einem der Ansprüche 1 bis 3, dadurch gekennzeichnet, daß die Menge der Fraktion des abschließend abgezogenen Gases in Prozent der Menge des bei der Regenerierung freigesetzten Gases derart geregelt wird, daß dieser Prozentsatz dividiert durch den Prozentsatz von $H_2S$ im bei der Absorption nach der ersten Absorp vorhandenen Gas $CO_2 + H_2S$ nicht größer als 3,05 ist, wenn man 30 % oder mehr $H_2S$ in dem abschließenden Gas wünscht, und daß dieser Prozentsatz kleiner als 2,4 ist, wenn das abschließende Gas mehr als 40 % $H_2S$ einschließen soll.

7. Vorrichtung zur Durchführung des Verfahrens nach einem der Ansprüche 1 bis 6, die wenigstens einen ersten Absorber (2), einen Regenerator (5) und einen zweiten Absorber (6) sowie eine Leitung (4, 4') aufweist, um die absorbierende Flüssigkeit von der Unterseite des ersten Absorbers (2) zur Kopfseite des Regenerators (5) zu transportieren, sowie ferner Leitungen (13-14-16-16') aufweist, um das regenerierte Absorptionsmittel von der Unterseite des Regenerators zum Oberteil der beiden Absorber durchzulassen, mit einem Gasauslaß (3, 17) an der Spitze jedes Absorbers und einer das abschließende Gas regelnde (v) Abzugseinrichtung (7) in Höhe des Regenerators, dadurch gekennzeichnet daß der Innenraum des zweiten Absorbers (6) ausgehend von einer Zwischenzone (Z), die in der Nähe der Eintrittshöhe (4') des Absorptionsmittels und der Abzugshöhe (7) des abschließenden Gases liegt, eine direkte Folge nach oben zum Innenraum des Regenerators (5) bildet.

8. Vorrichtung nach Anspruch 7, dadurch gekennzeichnet, daß der zweite Absorber (6) und der Regenerator (5) wechselseitig eine Folge durch alle ihre Querschnitte bilden.

9. Vorrichtung nach Anspruch 7 oder 8, dadurch gekennzeichnet, daß die Höhe des Abzugs (7) für das abschließende Gas in der Nähe der Höhe des Zuflusses (4') des Absorptionsmittels im Regenerator liegt, und daß diese beiden Höhen in der Nähe jener Höhe liegen, von der aus die Wirkung des zweiten Absorbers (6) beginnt.

10. Vorrichtung nach Anspruch 9, dadurch gekennzeichnet, daß die Abzugseinrichtung (7) sich in Höhe des letzten Regenerationsbodens befindet, während die Höhe der Zuleitung (4') für den ersten Boden des zweiten Absorbers sich unmittelbar oberhalb des letzten Bodens des Regenerators befindet.

**Claims:**

1. Improvement in the enrichment of a gas in hydrogen sulphide, comprising selective absorption by a liquid in a primary absorption zone, regeneration of the liquid by heating and/or stripping by an inert gas with liberation of the gases absorbed and recovery of a fraction of the liberated gases, the remainder being subjected to a second absorption in a secondary absorption zone by a new or regenerated absorbent liquid identical with that utilized in the primary absorption zone, characterized in that, in one and the same operative zone (Z) common to the zones of regeneration and secondary absorption, there occur simultaneously: introduction of the liquid from the primary absorption, movement of the gases liberated during regeneration, flow of the liquid derived from the secondary absorption and discharge of a fraction of the liberated gases enriched in $H_2S$.

2. Improvement according to claim 1, characterized in that the liquid used for the secondary absorption mixes with the contents of the regeneration zone over the whole cross-section of the latter or over a large proportion of this cross-section.

3. Improvement according to claim 1 or 2, characterized in that the amount of the fraction of gas withdrawn is substantially equal to 1/n of the amount, $H_2S + CO_2$, contained in the absorbent liquid discharging from the primary absorption zone, when the molar ratio $H_2S:(H_2S + CO_2)$ desired is n times greater than the corresponding ratio in the absorbent liquid discharging from the primary absorption zone.

4. Improvement according to any of claims 1 to 3, characterized in that the amount of the fraction of the final gas withdrawn, as a percentage of the amount of gas liberated during regeneration, is predetermined as a function of the desired $H_2S$ percentage content in the final gas, for various concentrations of $H_2S$ in the liquid derived from the primary absorption, by means of the graph according to Fig. 2.

5. Improvement according to any of claims 1 to 3, characterized in that the amount of the fraction of the final gas withdrawn, as a percentage of the amount of gas liberated during regeneration, is predetermined as a function of the desired $H_2S$ percentage content in the gas withdrawn, for various concentrations of $H_2S$ in the liquid derived from the final absorption, by means of the graph according to Fig. 3.

6. Improvement according to any of claims 1 to 3, characterized in that the amount of the fraction of the final gas withdrawn, as a percentage of the amount of gas liberated during regeneration, is regulated in such a way that this percentage, divided by the percentage of $H_2S$ in the gases, $CO_2 + H_2S$, present in the absorbent after the first absorption, does not exceed 3.05 when 30% or more $H_2S$ is desired in the final gas and that it is lower than 2.4 if the final gas is to contain more than 40% $H_2S$.

7. Apparatus for carrying out the improved process according to any of claims 1 to 6, which comprises at least one primary absorber (2), a regenerator (5) and a secondary absorber (6), a duct (4,4') for transferring the absorbent liquid from the base of the primary absorber (2) to the head of the regenerator (5), ducts (13-14-16-16') for passing the regenerated absorbent from the base of the regenerator to the top of the two absorbers, a gas outlet (3,17) at the top of each absorber and a withdrawal device (7) which is adjustable (v) for the final gas, at the top of the regenerator, characterized in that the interior space of the secondary absorber (6) is located directly above that of the regenerator (5), from an intermediate zone (Z) situated adjacent the level of introduction (4') of the absorbent and the level of withdrawal (7) of the final gas.

8. Apparatus according to claim 7, characterized in that the secondary absorber (6) and the regenerator (5) are mutually adjacent over the whole of their transverse cross-section.

9. Apparatus according to claim 7 or 8, characterized in that the level of withdrawal (7) of the final gas is adjacent the level of introduction (4') of the absorbent into the regenerator and these two levels are adjacent that where the action of the secondary absorber (6) commences.

10. Apparatus according to claim 9, characterized in that the withdrawal (7) is at the level of the last regeneration plate, while the level of introduction (4') corresponds to the first plate of the secondary absorber situated immediately above the last plate of the regenerator.

FIG.1

FIG. 2

H₂S % GA plotted against 100 Q₇ : (Q₇ + Q₁₇)

FIG. 3